# EUROPÄISCHE PATENTSCHRIFT

(11) **EP 1 103 796 B1**
(45) Veröffentlichungstag und Bekanntmachung des Hinweises auf die Patenterteilung: **08.10.2003**
(21) Anmeldenummer: 00123074.7
(22) Anmeldetag: 01.11.2000
(51) Int. Cl.: G01F 23/26

(54) **Sensor zur Detektion eines vorbestimmten Füllgrades eines Behälters**
Sensor for the detection of a predetermined level in a container
Capteur pour la détection d'un niveau prédéterminé dans un récipient

(30) Priorität: 19.11.1999 CH 212099
(43) Veröffentlichungstag der Anmeldung: 30.05.2001
(73) Patentinhaber: ESEC Trading S.A., 6330 Cham (CH)
(72) Erfinder: Mannhart, Eugen, Dr., 6330 Cham (CH); Günther, Thomas, 8800 Thalwil (CH)
(74) Vertreter: Falk, Urs, Dr.

(56) Entgegenhaltungen:
- GB-A- 1 060 671
- US-A- 4 470 008
- US-A- 4 732 543

## Beschreibung

Die Erfindung betrifft einen Sensor zur Detektion eines vorbestimmten Füllgrades eines Behälters der im Oberbegriff des Anspruchs 1 genannten Art.

Solche Sensoren eignen sich beispielsweise zur Detektion des Zeitpunktes, bei dem ein Behälter leer wird und gegen einen vollen Behälter ausgewechselt werden muss. In der Halbleiterindustrie werden beim Die Bonden von Chips kapazitive Sensoren eingesetzt, um den Füllstand einer mit Epoxy gefüllten Spritze zu überwachen und ein Alarmsignal abzugeben, sobald die Spritze über ein vorbestimmtes Mass entleert wird. Solche Sensoren sind z.B. von der Firma IMF unter der Bezeichnung KI-3015-BPKG erhältlich.

Diesen Sensoren haften gravierende Nachteile an. Ihr relativ grosser Durchmesser von ca. 10 mm hat zur Folge, dass sich beim Wechsel der entleerten Spritze noch ein beträchtlicher Teil des teuren Epoxy in der Spritze befindet. Das Sensorsignal unterliegt zudem grossen Schwankungen, d.h. dass nach jedem Spritzenwechsel die Schaltschwelle des Sensors irgendwie neu eingestellt werden muss.

Aus der US 4'002'996 ist ein kapazitiver Sensor zur Messung des Füllstandes eines Behälters mit drei kapazitiven Elektroden bekannt, die zwei in Reihe angeordnete Kondensatoren darstellen und auf den Behälter aufgeklebt werden. Aus dem Differenzsignal der beiden Kondensatoren wird das Füllstandssignal gebildet. Auch bei diesem Sensor befindet sich das Füllstandsniveau relativ weit vom Auslass des Behälters entfernt und es bleibt relativ viel Material im Behälter zurück.

Der Erfindung liegt die Aufgabe zugrunde, einen Sensor zur Detektion des Füllgrades von beim Die Bonden mit Epoxy gebräuchlichen Spritzen vorzuschlagen, der die Erfassung eines sehr geringen Füllgrades der Spritze ermöglicht, so dass ein Minimum an Material in der Spritze zurückbleibt, und der einfach handhabbar ist. Eine weitere Aufgabe besteht darin, eine elektronische Schaltung vorzuschlagen, die den Betrieb des Sensors ohne Justierung ermöglicht.

Die genannte Aufgabe wird erfindungsgemäss gelöst durch die Merkmale des Anspruchs 1. Vorteilhafte Weiterbildungen sind Gegenstand der Unteransprüche.

Der erfindungsgemässe Sensor zur Detektion eines vorbestimmten Füllgrades eines Behälters weist drei kapazitive Elektroden auf, die einen ersten und einen zweiten Kondensator bilden. Die drei kapazitiven Elektroden sind in drei parallel zueinander verlaufenden Ebenen angeordnet. Eine durch die drei kapazitiven Elektroden hindurchgehende Bohrung nimmt den Behälter auf. Bevorzugt ist der erste Kondensator Teil eines ersten RC-Gliedes und der zweite Kondensator Teil eines zweiten RC-Gliedes, wobei die beiden RC-Glieder unterschiedliche Zeitkonstanten aufweisen. Die Messung der relativen Änderung der beiden Zeitkonstanten ermöglicht den Betrieb des Sensors ohne irgendwelche Justierung.

Nachfolgend wird ein Ausführungsbeispiel der Erfindung anhand der Zeichnung näher erläutert.

Es zeigen:
- Fig. 1: einen Sensor zur Detektion eines vorbestimmten Füllgrades eines Klebstoff enthaltenden Behälters im Querschnitt,
- Fig. 2: den Sensor in der Draufsicht,
- Fig. 3: einen weiteren Sensor,
- Fig. 4: eine elektronische Schaltung zum Betrieb des Sensors,
- Fig. 5: ein Ausgangssignal des Sensors, und
- Fig. 6: schematisch die Elektroden eines elektrisch abgeschirmten Sensors.

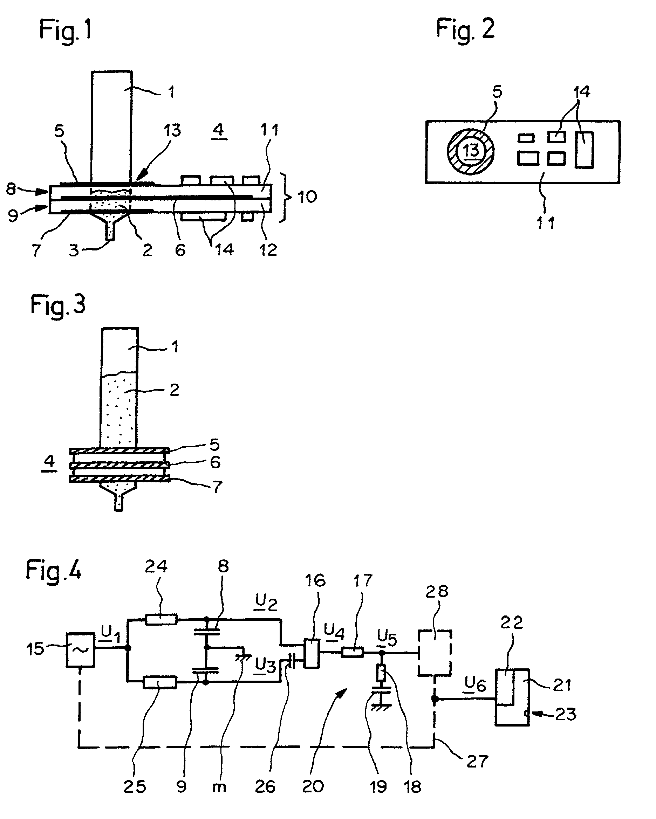

Die nicht massstäblich gezeichnete Fig. 1 zeigt einen Behälter in der Form einer Spritze 1, die z.B. bei Die Bondern zum Auftragen von Klebstoff 2 auf ein Substrat verwendet wird. Der Klebstoff 2 wird vorzugsweise mittels Druckluft durch die Öffnung 3 der Spritze 1 portionenweise herausgepresst. Als Klebstoffe 2 kommen Epoxy aller Art, insbesondere Silberpulver oder Silberflocken enthaltende Epoxidharze, zur Anwendung. Zur Detektion eines vorbestimmten Füllgrades des Behälters 1 dient ein Sensor 4 mit drei kapazitiven Elektroden 5 - 7, die in parallel zueinander verlaufenden Ebenen angeordnet sind und die, wie in der Figur 1 angedeutet ist, zwei in Reihe geschaltete Kondensatoren 8 und 9 bilden. Der Sensor 4 ist bevorzugt aus einer mehrschichtigen Leiterplatte 10 mit drei elektrisch leitenden Schichten hergestellt, die durch zwei elektrisch nicht leitende Schichten 11 bzw. 12 getrennt sind. Die Leiterplatte 10 weist eine durch die drei kapazitiven Elektroden 5 - 7 hindurchgehende, kreisrunde Bohrung 13 zur Aufnahme der Spritze 1 auf, so dass die kapazitiven Elektroden 5 - 7 die Spritze 1 vollständig umschliessen. Der Durchmesser der Bohrung 13 entspricht vorzugsweise dem Durchmesser der Spritze 1. Die kapazitiven Elektroden 5 - 7 erstrecken sich nicht mehr wie im Stand der Technik parallel, sondern senkrecht zur Oberfläche der Spritze 1. Der Klebstoff2 befindet sich somit im Streufeld der kapazitiven Elektroden 5 - 7. In der Figur befindet sich das Niveau des Klebstoffes 2 zwischen den beiden oberen kapazitiven Elektroden 5 und 6: Der Wechsel der Spritze 1 ist demnächst fällig. Die nicht leitenden Schichten 11 und 12 sind typisch je etwa 0.2 mm bis 2 mm dick, die leitenden Schichten je etwa 30 - 50 µm, der Sensor 4 also etwa 0.5 mm bis 2 mm. Die kapazitiven Elektroden 5 und 7 sind beispielsweise ringförmig (siehe Fig. 2), während sich die mittlere kapazitive Elektrode 6 praktisch über die ganze Fläche der Leiterplatte 10 ausdehnt.

Für den Betrieb des Sensors 4 ist eine elektronische Schaltung vorgesehen, mit deren Bauelementen 14 die mehrschichtige Leiterplatte 10 ein- oder doppelseitig bestückt ist. Die drei elektrisch leitenden Schichten werden bei der Herstellung der mehrschichtigen Leiterplatte 10 in herkömmlicher Art so strukturiert, dass einerseits die kapazitiven Elektroden 5 - 7 und andererseits Leiterbahnen zur Verbindung der Bauelemente 14 entstehen. Zur Verbindung der kapazitiven Elektroden 5 - 7 mit den Bauelementen 14 sind entsprechende Durchkontaktierungen vorhanden.

Die von den kapazitiven Elektroden 5 - 7 ausgehenden Feldlinien des elektrischen Feldes durchfluten das Innere der Spritze 1 in optimaler Weise, da alle kapazitiven Elektroden 5 - 7 die Spritze 1, abgesehen von etwas Spiel, direkt berühren.

Allfällige Temperatur- oder Feuchtigkeitsschwankungen ändern den Abstand zwischen den kapazitiven Elektroden 5 und 6 in gleichem Masse wie den Abstand zwischen den kapazitiven Elektroden 6 und 7, so dass sich die Kapazitäten der Kondensatoren 8 und 9 in gleichem Masse ändern.

Der Sensor 4 kann an sich auf beliebiger Höhe der Spritze 1 positioniert werden, insbesondere aber am Ansatz der zur Öffnung 3 führenden Verengung. Der erfindungsgemässe Sensor 4 ermöglicht es also, die Spritze 1 praktisch vollständig zu entleeren, bevor der Wechsel der Spritze 1 angezeigt wird.

Die Fig. 2 zeigt den Sensor 4 in Draufsicht. Die elektronischen Bauelemente 14 sind unmittelbar neben der kapazitiven Elektrode 5 angeordnet.

Die Fig. 3 zeigt einen weiteren Sensor 4, bei dem die drei kapazitiven Elektroden 5 - 7 aus drei parallel angeordneten metallischen Platten gebildet sind, die je eine kreisrunde Bohrung 13 aufweisen, durch die hindurch die Spritze 1 eingeschoben wird. Zwischen den Platten befinden sich als Distanzhalter Körper aus dielektrischem Material.

Die Fig. 4 zeigt eine zum Betrieb des Sensors 4 besonders geeignete Schaltung mit einem Oszillator 15, einem Signaldetektor 16 mit zwei Eingängen und mit einem aus Widerständen 17, 18 und einem Kondensator 19 gebildeten Integrator 20. Die Schaltung weist weiter einen Mikroprozessor 21 mit einem integrierten A/D-Wandler 22 und einem entweder logisch "0" oder logisch "1" führenden Ausgang 23 auf. Logisch "0" bedeutet, dass die Spritze 1 noch Klebstoff enthält, logisch "1" bedeutet, dass die Spritze 1 gewechselt werden muss. Der Oszillator 15 liefert an seinem Ausgang ein auf eine Masse m bezogenes rechteckförmiges Wechselspannungssignal U₁ einer vorbestimmten Frequenz, die typisch im Bereich von 200 kHz bis 400 kHz liegt. Die Frequenz ist so gewählt, dass das von den Kondensatoren 8 und 9 erzeugte elektrische Feld in den Klebstoff 2 eindringt, sofern noch Klebstoff 2 vorhanden ist. Der Kondensator 8 und ein Widerstand 24 bilden ein erstes RC-Glied in der Form eines Tiefpasses, der Kondensator 9 und ein Widerstand 25 bilden ein zweites RC-Glied in der Form eines Tiefpass.

Die beiden Tiefpässe werden mit dem vom Oszillator 15 gelieferten Wechselspannungssignal U₁ beaufschlagt, während die kapazitive Elektrode 6 an der Masse m liegt. Die am Ausgang der beiden Tiefpässe erscheinenden Wechselspannungssignale U₂ bzw. U₃ sind direkt bzw. über einen Koppelkondensator 26 auf die beiden Eingänge des Signaldetektors 16 geführt. Der Signaldetektor 16 liefert an seinem Ausgang eine rechteckförmige Spannung U₄, deren Tastverhältnis von der Form der Wechselspannungen U₂ und U₃ abhängt. Die Spannung U₄ wird mittels des Integrators 20 geglättet und entweder direkt als Spannung U₅ oder indirekt als von der Spannung U₅ abgeleitete Spannung U₆ dem A/D-Wandler 22 des Mikroprozessors 21 zugeführt.

Der kapazitive Sensor 4 soll ein Signal liefern, das die problemlose Unterscheidung der drei folgenden Zustände ermöglicht:

### Zustand 1

In der Bohrung 13 befindet sich keine Spritze 1.

### Zustand 2

In der Bohrung 13 befindet sich eine mit Klebstoff 2 gefüllte Spritze 1.

### Zustand 3

Der Zustand 3 ist ein dynamischer Zustand und tritt dann ein, wenn die Spritze 1 leer wird und vom Sensor 4 ein Wechsel der Spritze 1 angezeigt werden soll. In der Bohrung 13 befindet sich die Spritze 1. Das Niveau des Klebstoffs 2 unterschreitet das Niveau der obersten kapazitiven Elektrode 5, bleibt aber oberhalb des Niveaus der zweiten kapazitiven Elektrode 6.

Im Betrieb werden die beiden Kondensatoren 8 und 9 durch das Wechselspannungssignal U₁ laufend geladen und entladen. Die Zeitkonstanten τ₁ und τ₂ der beiden Tiefpässe bestimmen die Geschwindigkeit der Umladungen der beiden Kondensatoren 8 und 9. Der Signaldetektor 16 dient dazu, aus den Umladezeiten der Kondensatoren 8 bzw. 9 ein Signal abzuleiten, das die selbsttätige Unterscheidung der drei oben angegebenen Zustände ermöglicht. Erfindungsgemäss sind deshalb die beiden Tiefpässe so dimensioniert, dass sie unterschiedliche Zeitkonstanten τ₁ und τ₂ aufweisen. Aus den Gleichungen τ₁ = R₁∗C₁ und τ₂ = R₂∗C₂, wobei R₁ den Wert des Widerstandes 24, R₂ den Wert des Widerstandes 25, C₁ die Kapazität des Kondensators 8 und C₂ die Kapazität des Kondensators 9 bezeichnen, lassen sich verschiedene Möglichkeiten ableiten, wie die Zeitkonstanten τ₁ und τ₂ beeinflusst werden können. Drei Beispiele sind hier näher erläutert:

### Beispiel 1

Die kapazitiven Elektroden 5 und 7 sind geometrisch gleich ausgebildet. Die beiden Kondensatoren C₁ und C₂ weisen daher unter identischen Bedingungen die gleiche Kapazität auf. Die Widerstandswerte R₁ und R₂ der beiden Widerstände 24 und 25 sind verschieden gewählt, z.B. R₂ = 50 ∗ R₁.

### Beispiel 2

Die kapazitiven Elektroden 5 und 7 sind geometrisch unterschiedlich ausgebildet. Die beiden Kondensatoren 8 und 9 weisen daher unter identischen Bedingungen verschiedene Kapazitäten C₁ bzw. C₂ auf. Die Widerstandswerte der beiden Widerstände R₁ und R₂ sind gleich oder verschieden gewählt.

### Beispiel 3

Die kapazitiven Elektroden 5 und 7 sind geometrisch gleich ausgebildet. Parallel zum Kondensator 9 ist ein zusätzlicher Kondensator geschaltet. Die Widerstandswerte der beiden Widerstände R₁ und R₂ sind gleich oder verschieden gewählt.

Eine für das Beispiel 1 besonders geeignete elektronische Schaltung wird nun näher erläutert. Der Signaldetektor 16 dient dazu, aus den beiden Wechselspannungssignalen U₂ und U₃ die in den Zeitkonstanten τ₁ und τ₂ enthaltene Information zu extrahieren und im Signal U₄ darzustellen. Bevorzugt wird dazu ein herkömmlicher PLL-Baustein (z.B. MC14046 von Motorola oder CD4046 von National Semiconductor) verwendet. Ein solcher PLL-Baustein enthält einen Oszillator sowie in der Regel mehrere Phasendetektoren, wovon einer als XOR-Glied (exclusive OR) ausgebildet ist. Als Signaldetektor 16 dient vorzugsweise der als XOR-Glied ausgebildete Phasendetektor. Dem einen Eingang des XOR-Gliedes wird das Signal U₂ zugeführt, dem anderen Eingang das Signal U₃. Das XOR-Glied führt an seinem Ausgang bekanntlich dann ein Signal logisch "0", wenn an den beiden Eingängen das gleiche logische Signal anliegt, und ein Signal logisch "1", wenn an den beiden Eingängen unterschiedliche logische Signale anliegen. Die durch die Zeitkonstante τ₁ definierte Anstiegszeit des Wechselspannungssignals U₂ bestimmt den Zeitpunkt, an dem das Signal am zugehörigen Eingang des XOR-Gliedes von logisch "0" auf logisch "1" bzw. wieder von logisch "1" auf logisch "0" wechselt. Die durch die Zeitkonstante τ₂ definierte Anstiegszeit des Wechselspannungssignals U₃ bestimmt analog die Schaltzeitpunkte des anderen Einganges des XOR-Gliedes. Ändert also mindestens eine der beiden Zeitkonstanten τ₁ und τ₂, dann ändern auch das Wechselspannungsignal U₄ und die Spannung U₅.

Damit eine Änderung der Zeitkonstanten τ₁ und τ₂ messbar ist, müssen die Zeitkonstanten τ₁ und τ₂ vergleichbar sein mit der Schwingungsdauer T = 1/f der Frequenz f des Wechselspannungssignals U₁. Daraus ergibt sich, dass die Frequenz f grösser sein soll als die Grenzfrequenzen der beiden Tiefpässe. Der Nachteil ist, dass die Tiefpässe dann als Filter für das Wechselspannungssignal U₁ wirken und daher eine relativ kleine Amplitude der Wechselspannungssignale U₂ und U₃ bewirken. Es hat sich gezeigt, dass die Amplitude des Wechselspannungssignals U₂ ausreichend gross ist, dass aber die Amplitude des Wechselspannungssignals U₃ zu klein ist und verstärkt werden muss. Der eine Eingang des XOR-Gliedes ist bereits mit einer Schaltung versehen, die ein anliegendes Wechselspannungssignal automatisch soweit verstärkt, bis dessen Pegel ausreichend ist, um im XOR-Glied Schaltvorgänge auszulösen. Aus diesem Grund wird das Wechselspannungssignal U₃ über den Kopplungskondensator 26 diesem Eingang des XOR-Gliedes zugeführt. Ein separater Verstärker ist also nicht erforderlich.

Obwohl diese Schaltung zufriedenstellend arbeitet, hat es sich gezeigt, dass die Unterscheidbarkeit der drei Zustände noch besser wird, wenn die Spannung U₅ am Ausgang des Integrators 20 zur Steuerung der Frequenz f des Oszillators 15 benutzt wird. Bevorzugt wird daher die Spannung U₅ in einer Rückkopplungsschlaufe 27 einem Verstärker 28 zugeführt, dort um einen vorbestimmten Faktor verstärkt und im Pegel um eine feste Gleichspannungskomponente verschoben, und als frequenzsteuernde Spannung U₆ dem Oszillator 15 zugeführt.

Das Verhalten der elektronischen Schaltung im Beispiel 1 ist folgendermassen:

### Zustand 1

Aufgrund der verschiedenen Zeitkonstanten τ₁ und τ₂ der beiden Tiefpässe ergibt sich ein maximaler Wert der Spannung U₆ von 4.5 V und eine Frequenz des Wechselspannungssignals U₁ von etwa 360 kHz.

### Zustand 2

Die Kapazitätswerte C₁ und C₂ der beiden Kondensatoren 8 und 9 ändern sich gegenüber ihren Werten im Zustand 1 in gleichem Masse. Die Zeitkonstanten τ₁ und τ₂ ändern sich in unterschiedlichem Masse. Für die Spannung U₆ ergibt sich ein kleinerer Wert von etwa 2 V und die Frequenz des Wechselspannungssignals U₁ sinkt auf etwa 310 kHz.

### Zustand 3

Die Kapazität C₁ des Kondensators 8 und damit die Zeitkonstante τ₁ ändern sich in Funktion des Niveaus des Klebstoffs 2. Die Kapazität C₂ des Kondensators 9 und damit die Zeitkonstante τ₂ ändern sich nicht. Mit zunehmender Änderung der Kapazität C₁ des Kondensators 8 und damit der Zeitkonstante τ₁ erhöht sich die Spannung U₆. Wenn das Niveau des Klebstoffs 2 das Niveau der zweiten kapazitiven Elektrode 6 erreicht hat, beträgt der Wert der Spannung U₆ etwa 2.6 V und die Frequenz des Wechselspannungssignals U₁ hat einen Wert von etwa 323 kHz.

Die Spannung U₆ wird dem A/D-Wandler 22 des Mikroprozessors 21 zugeführt. Der Mikroprozessor 21 frägt den A/D-Wandler 22 laufend ab und verhält sich im Beispiel 1 wie folgt:
- Ist U₆ grösser als 4 V, dann führt der Ausgang 23 des Mikroprozessors 21 logisch "1".
- Ist U₆ kleiner als 2.6 V, dann speichert der Mikroprozessor 21 den Wert von U₆ als Wert Z₀. Der Ausgang 23 des Mikroprozessors 21 führt logisch "0".
- Ist U₆ kleiner als 2.6 V und kleiner als Z₀, dann speichert der Mikroprozessor 21 den Wert von U₆ als neuen Wert Z₀. Der Ausgang 23 des Mikroprozessors 21 führt logisch "0".
- Ist U₆ kleiner als 2.6 V und grösser als Z₀ + ΔZ, wobei ΔZ einen vorbestimmten Schwellwert von etwa 0.4 V (oder 0.5 V) bezeichnet, dann wird der Ausgang 23 des Mikroprozessors 21 auf logisch "1" gesetzt zur Anzeige, dass die Spritze 1 leer ist und gewechselt werden muss.

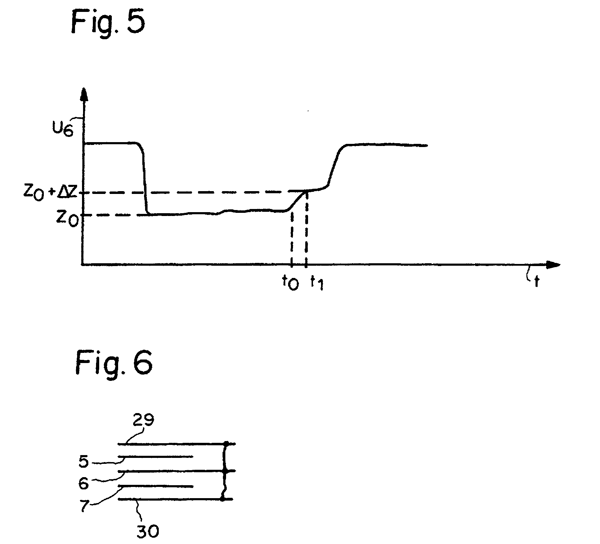

Das Diagramm in der Fig. 5 zeigt den Verlauf von U₆ im Laufe der Zeit t. Deutlich erkennbar sind die beiden Spannungsniveaus, die den Zuständen 1 = "keine Spritze 1" und 2 = "mit Klebstoff gefüllte Spritze 1" enstsprechen, sowie der Anstieg der Spannung U₆ ab dem Zeitpunkt t₀ während des Zustandes 3 = "leer werdende Spritze 1". Am Zeitpunkt t₁ erreicht die Spannung U₆ den Wert Z₀ + ΔZ, worauf vom Mikroprozessor 21 der Wechsel der Spritze 1 angezeigt und die weitere Entleerung der Spritze 1 gestoppt wird. Die Spannung U₆ unterliegt aufgrund externer Einflüsse wie der Temperatur der Spritze 1, der Temperatur des Klebstoffs 2, der Umgebungstemperatur, etc. leichten Schwankungen. Diese Schwankungen sind aber geringer als ΔZ. Das Niveau der Spannung U₆ im Zustand 2 hängt zudem ab vom Klebstoff selbst. Der Sensor 4 adaptiert sich selbsttätig an verschiedene Klebstoffe. Es ist weder nötig, den Sensor 4 nach einem Wechsel des Klebstoffs neu einzustellen, noch den Sensor 4 nach einem Spritzenwechsel zurückzusetzen.

Es ist möglich, als RC-Glieder anstelle der Tiefpässe Hochpässe vorzusehen, d.h. in der Schaltung einerseits den Kondensator 8 und den Widerstand 24 zu vertauschen und andererseits den Kondensator 9 und den Widerstand 25 zu vertauschen.

Die Fig. 6 zeigt schematisch im Querschnitt die Elektroden eines weiteren Sensors 4. Der Sensor 4 weist fünf parallel angeordnete Elektroden 5, 6, 7, 29 und 30 auf. Die beiden äusseren Elektroden 29 und 30 dienen in erster Linie der Abschirmung der inneren Elektroden 5, 6 und 7. Sie sind mit der mittleren Elektrode 6 elektrisch direkt (wie gezeigt) oder über einen Kopplungskondensator verbunden. Bei diesem Sensor 4 verdoppelt sich einerseits die messempfindliche Fläche, andererseits schirmen die beiden äusseren Elektroden 29 und 30, falls sie geerdet sind, die mittleren Elektroden 5, 6, und 7 gegen äussere Einflüsse ab. Die beiden äusseren Elektroden 29 und 30 könnten auch als Teil eines Gehäuses realisiert sein.

## Patentansprüche

1. Sensor zur Detektion eines vorbestimmten Füllgrades eines Behälters, mit drei kapazitiven Elektroden (5 - 7), die einen ersten und einen zweiten Kondensator (8, 9) bilden, **dadurch gekennzeichnet, dass** die drei kapazitiven Elektroden (5 - 7) in drei parallel zueinander verlaufenden Ebenen angeordnet sind und dass eine durch die drei kapazitiven Elektroden (5 - 7) hindurchgehende Bohrung (13) zur Aufnahme des Behälters vorhanden ist.

2. Sensor (4) nach Anspruch 1, **dadurch gekennzeichnet, dass** der erste Kondensator (8) und ein Widerstand (24) Teile eines ersten RC-Gliedes bilden, dass der zweite Kondensator (9) und ein zweiter Widerstand (25) Teile eines zweiten RC-Gliedes bilden und dass die beiden RC-Glieder unterschiedliche Zeitkonstanten aufweisen.

3. Sensor (4) nach Anspruch 2, **dadurch gekennzeichnet, dass** der Widerstand (25) des zweiten RC-Gliedes mindestens zehnmal grösser als der Widerstand (24) des ersten RC-Gliedes ist.

4. Sensor nach einem der Ansprüche 1 bis 3, **dadurch gekennzeichnet, dass** die drei kapazitiven Elektroden (5 - 7) aus drei elektrisch leitenden Schichten einer mehrschichtigen Leiterplatte (10) gebildet sind, die durch zwei elektrisch nicht leitende Schichten (11) bzw. (12) getrennt sind.

5. Sensor nach einem der Ansprüche 1 bis 4, **dadurch gekennzeichnet, dass** zwei weitere kapazitive Elektroden (29, 30) vorgesehen sind, die entweder direkt oder über einen Kopplungskondensator mit der mittleren Elektrode (6) verbunden sind.

## Claims

1. Sensor for the detection of a predertermined filling level of a container, with three capacitive electrodes (5 - 7), which form a first and a second capacitor (8, 9), **characterised in that** the three capacitive electrodes (5 - 7) are arranged in three planes running parallel to each other and that a drill hole (13) running through the three capacitive electrodes (5 - 7) is present for acceptance of the container.

2. Sensor (4) in accordance with claim 1, **characterised in that** the first capacitor (8) and a first resistor (24) form parts of a first RC element, that the second capacitor (9) and a second resistor (25) form parts of a second RC element and that both RC elements have different time constants.

3. Sensor (4) in accordance with claim 2, **characterised in that** the second resistor (25) of the second RC element is at least ten times larger than the first resistor (24) of the first RC element.

4. Sensor in accordance with one of claims 1 to 3, **characterised in that** the three capacitive electrodes (5 - 7) are formed from three electrically conducting layers of a multi-layer printed circuit board (10) which are separated by two electrically non-conducting layers (11) and (12).

5. Sensor in accordance with one of claims 1 to 4, **characterised in that** two further capacitive electrodes (29, 30) are present which are connected to the middle electrode (6) either directly or via a coupling capacitor.

## Revendications

1. Capteur pour la détection d'un degré de remplissage prédéterminé d'un contenant, avec trois électrodes capacitives (5 - 7) formant un premier et un deuxième condensateur (8, 9), **caractérisé en ce que** les trois électrodes capacitives (5 - 7) sont disposées dans trois plans parallèles et **en ce qu'**il est prévu un alésage (13) qui traverse les trois électrodes capacitives (5 - 7) et est destiné à recevoir le contenant.

2. Capteur (4) selon la revendication 1, **caractérisé en ce que** le premier condensateur (8) et une résistance (24) sont des éléments constituants d'un premier circuit RC, que le deuxième condensateur (9) et une deuxième résistance (25) sont des éléments constituants d'un deuxième circuit RC et que les deux circuits RC ont des constantes de temps différentes.

3. Capteur (4) selon la revendication 2, **caractérisé en ce que** la résistance (25) du deuxième circuit RC est au moins dix fois plus grande que la résistance (24) du premier circuit RC.

4. Capteur selon l'une quelconque des revendications 1 à 3, **caractérisé en ce que** les trois électrodes capacitives (5 - 7) sont formées de trois couches conductrices d'électricité d'une carte de circuit imprimé multicouche (10), ces trois couches étant séparées par deux couches non conductrices d'électricité (11) et (12) respectivement.

5. Capteur selon l'une quelconque des revendications 1 à 4, **caractérisé en ce que** deux électrodes capacitives supplémentaires (29, 30) sont prévues, celles-ci étant reliées soit directement soit par l'intermédiaire d'un condensateur de liaison à l'électrode centrale (6).
